# EUROPÄISCHE PATENTANMELDUNG

(11) **EP 3 865 607 A1**
(43) Veröffentlichungstag der Anmeldung: **18.08.2021**
(21) Anmeldenummer: 21154675.9
(22) Anmeldetag: 02.02.2021
(51) Int. Cl.: C25B 1/30, A47L 15/42, D06F 35/00, C02F 1/467

(54) **VERWENDUNG EINER KOMPONENTE ALS ELEKTROLYT FÜR EINE ELEKTROCHEMISCHE ZELLE, VERFAHREN ZUM BETREIBEN EINES WASSERFÜHRENDEN ELEKTRISCHEN GERÄTS UND WASSERFÜHRENDES ELEKTRISCHES GERÄT**

(30) Priorität: 12.02.2020 DE 102020103632
(71) Anmelder: Miele & Cie. KG, 33332 Gütersloh (DE)
(72) Erfinder: Strothoff, Werner, 48336 Sassenberg (DE); Schmid, Maximilian, 49124 Georgsmarienhütte (DE)

(57) **Zusammenfassung**

Die Erfindung betrifft eine Verwendung eines Builders als Elektrolyt für eine elektrochemische Zelle (4). Weiterhin betrifft die Erfindung ein Verfahren zum Betreiben eines wasserführenden elektrischen Geräts mit einer Bleicheinrichtung (2) und einer elektrochemischen Zelle (4), aufweisend die Schritte
- Bereitstellen einer Elektrolytlösung, die Wasser und einen Builder als Elektrolyten enthält, in der elektrochemischen Zelle (4);
- Herstellung eines Bleichmittels mittels Aktivierens der elektrochemischen Zelle (4); und
- Zuführen des Bleichmittels aus der elektrochemischen Zelle (4) in die Bleicheinrichtung (2).

Ferner betrifft die Erfindung ein entsprechendes wasserführendes Haushaltsgerät.

## Beschreibung

Die Erfindung betrifft eine Verwendung einer Komponente als Elektrolyt für eine elektrochemische Zelle, ein Verfahren zum Betreiben eines wasserführenden elektrischen Geräts und ein wasserführendes elektrisches Gerät. Insbesondere betrifft die Erfindung die Verwendung der Komponente als Elektrolyt bei der Herstellung eines Reinigungsmittels in einer elektrochemische Zelle, ein Verfahren zum Betreiben eines wasserführenden elektrischen Geräts unter Einsatz des Reinigungsmittels und ein wasserführendes elektrisches Gerät, das ausgebildet und eingerichtet ist, das Verfahren durchzuführen.

Aus einem nicht druckschriftlich belegten Stand der Technik ist bekannt, dass zur Herstellung von Wasserstoffperoxid, das eine bleichende und desinfizierende Wirkung aufweist, in der elektrochemischen Zelle mit einer Gasdiffusionselektrode neben Luft eine Elektrolytlösung benötigt wird, um die elektrochemische Zelle zu betreiben. Als Elektrolytlösung wird eine wässrige Lösung mit anorganischen Salzen verwendet, die eine ausreichende Leitfähigkeit bereitstellen. Diese anorganischen Salze haben aber keine weitere Funktion in der elektrolytisch erzeugten Wasserstoffperoxid-haltigen Lösung. Wenn die elektrolytisch erzeugte Wasserstoffperoxid-haltige Lösung zum Bleichen und/oder Reinigen während eines Reinigungsvorgangs eingesetzt werden soll, ist es vorteilhaft einen Elektrolyten einzusetzen, der neben der Leitfähigkeit weiterhin eine oder mehrere weitere positive Eigenschaften wie zum Beispiel eine Erhöhung der Reinigungsleistung der elektrolytisch erzeugten Lösung aufweist.

Der Erfindung stellt sich somit das Problem, einen Elektrolyten für eine elektrochemische Zelle bereitzustellen, mittels der eine elektrolytisch erzeugte Lösung mit verbesserter Reinigungsleistung herstellbar ist. Ferner stellt sich das Problem, ein Verfahren zum Betreiben eines wasserführenden elektrischen Geräts und ein wasserführendes elektrisches Gerät bereitzustellen, die eine verbesserte Reinigungsleistung aufweisen.

Erfindungsgemäß wird dieses Problem durch eine Verwendung mit den Merkmalen des Patentanspruchs 1, ein Verfahren zum Betreiben eines wasserführenden elektrischen Geräts mit den Merkmalen des Patentanspruchs 4 und ein wasserführendes elektrisches Gerät mit den Merkmalen des Patentanspruchs 9 gelöst. Vorteilhafte Ausgestaltungen und Weiterbildungen der Erfindung ergeben sich aus den nachfolgenden Unteransprüchen.

Die mit der Erfindung erreichbaren Vorteile bestehen darin, dass der Elektrolyt neben seiner Funktion der Bereitstellung einer ausreichenden Leitfähigkeit weiterhin reinigungs- bzw. waschaktiv wirkt. Dadurch kann in der elektrochemischen Zelle eine Lösung mit einer erhöhten Reinigungswirkung erzeugt werden. Neben der exzellenten Reinigungswirkung der elektrolytisch erzeugten Reinigungslösung ist diese einfach und sicherer handhabbar ohne Gefährdung eines Nutzers, da sie in der elektrochemischen Zelle in situ erzeugbar ist und damit in dem wasserführenden elektrischen Gerät direkt einsetzbar ist, wenn es die elektrochemische Zelle enthält.

Die Erfindung betrifft eine Verwendung eines Builders als Elektrolyt für eine elektrochemische Zelle. Bevorzugt wird der Builder als Elektrolyt in der elektrochemischen Zelle verwendet. Der Builder wird bevorzugt in einer wässrigen Lösung während einer Elektrolyse als Elektrolyt verwendet. Er stellt eine für die Elektrolyse erforderliche Leitfähigkeit bereit. Die Verwendung des Builders ist vorteilhaft, weil er weiterhin als Wasserenthärter und/oder als reinigungs- bzw. waschaktive Substanz wirkt, d.h., weitere Eigenschaften und/oder Funktionen neben der für eine Elektrolyse erforderlichen Leitfähigkeit bereitstellt.

Bevorzugt wird der Builder bei der Herstellung eines Bleichmittels verwendet. Dadurch ermöglicht die Erfindung eine hervorragende Bleichleistung, wenn sie erforderlich ist, schädigt aber nicht beispielsweise Farben eines Reinigungsguts, wenn eine Bleichleistung nicht gewünscht ist. Zudem macht es die Erfindung möglich, ein Bleichmittel einzusetzen, ohne dass Lagerbehälter oder Flaschen bei falscher Lagerung sich aufblähen und bei langer Lagerzeit des Bleichmittels Aktivitätsverluste auftreten. Es ist möglich, ein kennzeichnungsfreies Bleichmittel für einen Reinigungsvorgang zu verwenden, da es mit der Erfindung möglich ist, eine Bleichmittel-haltige Lösung in dem wasserführenden elektrischen Gerät herzustellen und in dem Reinigungsvorgang in situ zu erzeugen und einzusetzen. Das erzeugte Bleichmittel weist bevorzugt neben der reinigenden und bleichenden auch eine desinfizierende Wirkung auf. Die Desinfektionswirkung bzw. Hygienewirkung zwischen einem Bleichmittel und einem Desinfektionsmittel wird als gleichbedeutend betrachtet.

Bevorzugt wird eine Elektrolytlösung, die Wasser und den Builder als Elektrolyt enthält, zusammen mit Sauerstoff zur Durchführung einer Elektrolyse in der elektrochemischen Zelle, die eine Gasdiffusionselektrode aufweist, verwendet, um Wasserstoffperoxid als das Bleichmittel zu erzeugen. Beispielsweise wird der elektrochemischen Zelle, wenn sie die Elektrolytlösung enthält, eine Sauerstoff-haltiges Gas wie Luft zugeführt und Strom angelegt, um Wasserstoffperoxid als das Bleichmittel zu erzeugen.

Das Bleichmittel weist bevorzugt Wasserstoffperoxid auf. Bevorzugt ist das Bleichmittel Wasserstoffperoxid. Wasserstoffperoxid weist eine hohe bakterizide Wirkung, eine gute Umweltverträglichkeit und eine gute technische Realisierbarkeit in der elektrochemischen Zelle auf. Das Wasserstoffperoxid kann selbst als das Bleichmittel eingesetzt werden oder, wenn der Elektrolyt zusammen mit einem Bleichaktivator verwendet wird, teilweise oder vollständig in der elektrochemischen Zelle zu einer aktivierten Bleiche wie beispielsweise Peroxyessigsäure umgesetzt werden, die weiterhin als Bleichmittel wirkt.

Bevorzugt wird das Bleichmittel in situ während einer Durchführung eines Reinigungsprogramms zur Reinigung von Wäsche, Geschirr, medizinischen Instrumenten und/oder Laborgeräten elektrolytisch hergestellt. Dadurch wird das Problem vermieden, dass eine Bleichmittel-haltige Lösung nicht lagerstabil ist und sich zersetzen kann, was ihre Reinigungswirkung mindert. Zudem wirkt der Builder weiterhin als reinigungsaktive Substanz, so dass weiterhin die Reinigungsleistung verbessert wird.

Die Erfindung betrifft ferner ein Verfahren zum Betreiben eines wasserführenden elektrischen Geräts mit einer Bleicheinrichtung und einer elektrochemischen Zelle, aufweisend die Schritte
- Bereitstellen einer Elektrolytlösung, die Wasser und einen Builder aufweist, in der elektrochemischen Zelle;
- Herstellung eines Bleichmittels mittels Aktivierens der elektrochemischen Zelle; und
- Zuführen des Bleichmittels aus der elektrochemischen Zelle in die Bleicheinrichtung.

Zuerst wird eine Wasser- und Builder-haltige Elektrolytlösung in der elektrochemischen Zelle bereitgestellt. Unter der Formulierung "Bereitstellen einer Elektrolytlösung, die Wasser und einen Builder aufweist, in der elektrochemischen Zelle" ist zu verstehen, dass die Elektrolytlösung entweder in der elektrochemischen Zelle angeordnet oder durch sie geleitet wird.

Die elektrochemische Zelle weist eine Elektrode auf und ist bevorzugt ausgebildet, unter Verwendung von dem Builder, Wasser, Luft und elektrischem Strom ein Wasserstoffperoxidhaltiges Bleichmittel herzustellen. Wenn erforderlich, kann die elektrochemische Zelle ausgebildet sein, mittels Wasser, Luft, elektrischem Strom und einer oder mehreren weiteren Verbindungen wie beispielsweise einem Katalysator oder einem Bleichaktivator eine aktivierte Bleiche als das Bleichmittel herzustellen. Bei der Elektrode der elektrochemischen Zelle handelt es sich daher bevorzugt um eine Gasdiffusionselektrode. Weist die elektrochemische Zelle den Builder, Wasser und Luft auf und fließt ein elektrischer Strom, wird an einer Anode der elektrochemischen Zelle Wasser oxidiert, wobei Protonen entstehen.

An einer Kathode der elektrochemischen Zelle, die bevorzugt als die Gasdiffusionselektrode ausgebildet ist, wird zugleich der in der Luft enthaltene Sauerstoff reduziert. Hierbei werden die Protonen verbraucht und Wasserstoffperoxid entsteht. Die Kathode ist bevorzugt als eine Sauerstoffdiffusionselektrode ausgebildet. Die Anode kann eine Mischoxidelektrode sein. Das Reaktionsprodukt der Elektrolyse ist bevorzugt eine Wasserstoffperoxid-Lösung. Bevorzugt sind ein Anodenraum, in dem sich die Anode befindet, und ein Kathodenraum, in dem sich die Kathode befindet, beispielsweise mittels einer Membran wie einer Kationenaustauschmembran räumlich getrennt, so dass bevorzugt eine alkalische Wasserstoffperoxid-Lösung als Bleichmittel-haltige Lösung hergestellt wird. Alternativ bevorzugt ist das Reaktionsprodukt eine aktivierte Bleiche, wenn das Wasserstoffperoxid weiterhin teilweise oder vollständig unter Einwirkung eines Bleichaktivators wie beispielsweise Triacetin zur aktivierten Bleiche wie beispielsweise Peroxyessigsäure umgesetzt wird.

Unter dem Ausdruck "Aktivieren der elektrochemischen Zelle" wird im Sinne der Erfindung das Starten und Durchführen der Elektrolyse verstanden. Bevorzugt umfasst das Aktivieren der elektrochemischen Zelle eine Zuführung eines Sauerstoff-haltigen Gases zu der elektrochemischen Zelle insbesondere ihrer Kathode und ein Anlegen von Strom an die elektrochemische Zelle. Durch den Zusatz des Builders ist die elektrische Leitfähigkeit der Elektrolytlösung ausreichend, so dass die elektrochemische Zelle während der Elektrolyse stromeffektiv arbeitet. Der Builder sorgt für eine ausreichende elektrische Leitfähigkeit und stabilisiert das - bei räumlicher Trennung von Anode und Kathode im alkalischen Milieu vorliegende - Wasserstoffperoxid.

Bei räumlicher Trennung der Anode und Kathode kann der Katholyt weiterhin in einem Vorlagebehälter bevorratet werden und/oder kann der Anolyt in einem weiteren Vorlagebehälter bevorratet werden. Durch die Bevorratung kann das wasserführende elektrische Gerät den mittels der Elektrolyse erzeugten Katholyten und/oder den mittels der Elektrolyse erzeugten Anolyten bei Bedarf einsetzen. Dadurch können der Katholyt und der Anolyt beispielsweise getrennt voneinander der Bleicheinrichtung während des Reinigungsprozesses zugegeben werden. Zudem ist es weiterhin möglich, das Verfahren derart auszuführen, dass der Kathodenraum und/oder der Anodenraum jeweils gespeist von dem Vorlagebehälter bzw. dem weiteren Vorlagebehälter über einen vorbestimmten Zeitraum durchströmt wird bzw. werden. Dadurch kann ein Umsatz verbessert werden.

Im Sinne der Erfindung ist ein Builder ein Komplexbildner und/oder Sequestrierungsmittel. Insbesondere in Kombination mit einem oder mehreren Tensiden oder anderen reinigungsaktiven Stoffen kann der Builder weiterhin die Reinigungswirkung und Schmutztragekraft der elektrolytisch erzeugten Bleichmittel-haltigen Lösung signifikant verbessern. Ein Builder hat zudem die Eigenschaft, die Ablösung von Schmutzes von Oberflächen von Reinigungsgut zu unterstützen, so dass die Reinigung wesentlich beschleunigt wird. Die Builderwirkung ist dabei unabhängig von der Wirkung als Komplexbildner oder Sequestrierungsmittel. Ein Builder wird auch als Gerüststoff bezeichnet. Der Builder ist ferner bevorzugt ausgebildet, das hergestellte Bleichmittel - auch im alkalischen Bereich - zu stabilisieren, wodurch das hergestellte Bleichmittel lagerfähig ist.

In einer bevorzugten Ausführungsform weist der Builder eine oder mehrere Komponenten auf, ausgewählt aus der Gruppe, bestehend aus Zitronensäure, Milchsäure, Phosphonat, Polycarbonsäure, Aminocarbonsäure, Polyacrylsäure und deren Salze. Bevorzugt besteht der Builder aus einer oder mehreren Komponenten, ausgewählt aus der Gruppe, bestehend aus Zitronensäure, Milchsäure, Phosphonat, Polycarbonsäure, Aminocarbonsäure, Polyacrylsäure und deren Salze.

Bevorzugt ist der Builder Zitronensäure und/oder deren Salze. Bevorzugt ist der Builder ein Citrat bevorzugter Natriumcitrat, Kaliumcitrat oder Calciumcitrat. Ein derartiger Builder ist weiterhin ein guter Komplexbildner. Durch die Komplexierung von Calcium- und Magnesiumionen verhindert oder reduziert dieser Builder insbesondere eine Bildung von Kalkseife und wirken wasserenthärtend.

Alternativ oder zusätzlich bevorzugt ist der Builder Milchsäure und/oder deren Salze. Auch Milchsäure und deren Salze sind gute Komplexbildner und wirken wasserenthärtend.

Alternativ oder zusätzlich bevorzugt ist der Builder ein Phosphonat. Phosphonate können Peroxide stabilisieren. Ferner können sie Metalle komplexieren, welche sonst das Peroxid inaktivieren würden. Sie sind Komplexbildner und wirken weiterhin wasserenthärtend.

Alternativ oder zusätzlich bevorzugt ist der Builder eine Polycarbonsäure und/oder deren Salze. Bevorzugt ist das Natriumsalz. Polycarbonsäuren bzw. ihre Salze stören insbesondere die Kristallisation von Erdalkaliverbindungen und damit aufgrund ihrer hohen Polarität deren Ablagerung auf Reinigungsgut. Ferner können sie Schmutzpartikel dispergieren. Dadurch wird die Reinigungsleistung weiterhin verbessert. Bevorzugt ist die Polycarbonsäure und/oder deren Salze eine Aminocarbonsäure und/oder deren Salze. Aminocarbonsäuren und Aminocarboxylate sind sehr gute Komplexbildner.

Alternativ oder zusätzlich bevorzugt ist der Builder Polyacrylsäure und/oder deren Salze. Bevorzugt ist das Natriumsalz. Polyacrylsäuren bzw. ihre Salze wirken als Dispergiermittel und eignen sich weiterhin insbesondere zur Calciumkomplexierung. Sie können Auswirkungen von wasserhärtenden Ionen reduzieren, Wasch- und/oder Spülwasser verbessern und Ablagerungen auf dem Reinigungsgut verhindern oder zumindest reduzieren.

Bevorzugt weist der Elektrolyt weiterhin ein oder mehrere anorganische Salze auf. Bevorzugt ist das mindestens eine anorganische Salz ausgebildet, die Leitfähigkeit der Elektrolytlösung zu erhöhen. Das oder die anorganischen Salze sind bevorzugt Natriumsulfat, Natriumhydrogencarbonat und/oder Kaliumhydrogencarbonat.

In einer bevorzugten Ausführungsform wird der Elektrolyt zusammen mit Wasser als eine Elektrolytlösung verwendet. Bevorzugt liegt der Builder in dem Wasser in gelöster Form bevorzugt in einer vorbestimmten Konzentration vor. Dadurch wird die Elektrolytlösung derart bereitgestellt, dass sie in die elektrochemische Zelle mittels einer automatischen Dosiereinrichtung dosierbar ist.

Die Elektrolytlösung kann weiterhin einen oder mehrere üblicher Inhaltsstoffe für Reinigungsmittel vorzugsweise zum Waschen von Wäsche oder Spülen von Geschirr, medizinischen Instrumenten oder Laborgeräten aufweisen. Beispiele hierfür sind Tenside, Schauminhibitoren, Enzyme, Enzymstabilisatoren, Farbübertragungsinhibitoren, Vergrauungsinhibitoren, optische Aufheller, UV-Absorber, Verdickungsmittel, Ionenaustauscher, Wasserenthärter, Farb- und Duftstoffe. Beispielsweise enthält die Elektrolytlösung weiterhin Zeolithe wie Zeolith A.

In dem Verfahren kann weiterhin ein Reinigungsmittel eingesetzt werden, das die Elektrolytlösung und weiterhin ein oder mehrere der vorstehend erwähnten üblichen Inhaltsstoffe für Reinigungsmittel in Form von zwei separaten Flüssigkeiten aufweist, wobei die eine Flüssigkeit den in Wasser gelösten Builder enthält und die weitere Flüssigkeit ein oder mehrere der für Wasch- oder Spül bzw. Reinigungsmittel typischen Inhaltsstoffe wie Tenside, Enzyme usw. enthält. Bevorzugt sind die zwei separaten Flüssigkeiten separat in einer extern oder intern dem wasserführenden elektrischen Gerät zugeordneten Dosiereinrichtung angeordnet, und wird der in Wasser gelöste Builder über die elektrochemische Zelle der Bleicheinrichtung zugeführt und wird zeitgleich oder zeitversetzt die weitere Flüssigkeit der Bleicheinrichtung direkt d.h. nicht über die elektrochemische Zelle zugeführt. Dadurch können in der weiteren Flüssigkeit enthaltene Bestandteile, die entweder nicht Bleichmittel-resistent sind und/oder selber elektrolytisch oxidierbar sind, vor einem Abbau geschützt werden. Dadurch wird vermieden, dass Inhaltsstoffe sich zersetzen, die empfindlich gegenüber dem elektrolytisch erzeugten Bleichmittel sind. In dieser Ausführungsform eignet sich das Reinigungsmittel insbesondere zum Einsatz als Waschmittel in einer Waschmaschine oder als Geschirrspülmittel in einem Geschirrspüler oder als Desinfektions- und/oder Spülmittel in einem Desinfektor.

Vorzugsweise wird die elektrochemische Zelle nach dem Zuführen des Bleichmittels aus ihr in die Bleicheinrichtung mit Wasser gespült. Dadurch wird die elektrochemische Zelle nach der Elektrolyse gereinigt.

Vor dem Schritt Zuführen des Bleichmittels aus der elektrochemischen Zelle in die Bleicheinrichtung wird vorzugsweise der Schritt Aktivieren eines Reinigungsvorgangs durchgeführt. Vorher hat der Nutzer an dem wasserführenden elektrischen Gerät an der Bleicheinrichtung ein gewünschtes Reinigungsprogramm eingestellt, dieser Schritt ist jedoch nicht Teil des erfindungsgemäßen Verfahrens, weil er nicht von dem wasserführenden elektrischen Gerät ausgeführt wird. Durch Einstellen des Reinigungsprogramms hat der Nutzer jedoch das wasserführende elektrische Gerät derart in Betrieb genommen, dass es einen Reinigungsvorgang aktiviert, der das erfindungsgemäße Verfahren aufweist.

Ferner betrifft die Erfindung ein wasserführendes elektrisches Gerät mit einer Bleicheinrichtung und einer elektrochemischen Zelle und einer Regel- und/oder Steuereinrichtung, die ausgebildet und eingerichtet ist, das Verfahren gemäß einer oder mehrerer der vorstehend beschriebenen Ausführungsformen zu regeln und/oder zu steuern.

Bei dem wasserführenden elektrischen Gerät kann es sich um ein privat genutztes Gerät oder gewerblich eingesetztes Gerät handeln. Das wasserführende elektrische Gerät ist vorzugsweise ein zum Waschen, Spülen und/oder Desinfizieren geeignetes Gerät, das gewerblich oder im Haushalt Verwendung findet. Das wasserführende elektrische Gerät ist vorzugsweise ein Reinigungsgerät. Im Sinne der Erfindung ist die Bleicheinrichtung jedwede Einrichtung, die zum Bleichen von Wasch- und/oder Spülgut oder sich selber geeignet ist wie beispielsweise Laugenbehälter-/Trommel-Aggregat einer Waschmaschine, einen Spülraum eines Geschirrspülers oder eines Desinfektors. Bevorzugt ist das wasserführende elektrische Gerät als eine Waschmaschine, ein Geschirrspüler oder ein Desinfektor ausgebildet. Die in die Bleicheinrichtung zugeführte Elektrolytlösung eignet sich beispielsweise als Reinigungsmittel zum Waschen von Waschgut wie beispielsweise Wäsche, Geschirr, medizinische Instrumente oder Laborgeräte und/oder die Bleicheinrichtung selber.

Die Waschmaschine, der Desinfektor und der Geschirrspüler stellen Bleicheinrichtungen dar, weil sie sich insbesondere zum Bleichen, Reinigen und/oder Desinfizieren von Reinigungsgut wie Wasch- und/oder Spülgut eignen. Aber auch Kaffeebrüh- und Aufbewahrungsräume einer Kaffeemaschine oder Räume zur Zubereitung von Essen und/oder Getränken ähnlicher Geräte stellen eine Bleicheinrichtung dar, weil sie mit der Zeit verkeimen und zum Bleichen, Reinigen und/oder Desinfizieren von sich selber eingesetzt werden. Die Bleicheinrichtung kann daher auch eine Vorrichtung sein, deren Hauptanliegen es nicht ist, Gegenstände zu reinigen, sondern die durch Gebrauch verkeimt und selber in Zeitabständen gereinigt werden muss und daher zeitweise als Bleicheinrichtung verwendet wird, um selbst gereinigt zu werden. Die Bleicheinrichtung stellt daher eine Einrichtung dar, die geeignet ist, durch Inbetriebnahme Gegenstände zu reinigen oder sich selber zu reinigen. Im Sinne der Erfindung ist eine Kaffeemaschine eine Bleicheinrichtung, die neben ihrem Zweck des Kaffeezubereitens von Zeit zu Zeit gereinigt wird, um ihrer Verkalkung, Verdreckung und/oder Verkeimung vorzubeugen. Im Sinne der Erfindung umfasst der Ausdruck "wasserführendes elektrisches Gerät" auch CIP- (Cleaning-in-place-) Anlagen oder dergleichen, die beispielsweise in der Hospitalhygiene und Lebensmittelindustrie eingesetzt werden. Die Erfindung betrifft daher auch ein Verfahren zum Betreiben eines Geräts, bei dem verfahrenstechnische Anlagen wie beispielsweise pharmazeutische Anlagen oder biologische Anlagen gereinigt werden, was in der Regel ortsgebunden durchgeführt wird. Die zu reinigende Anlage stellt in diesem Fall die Bleicheinrichtung dar. Vor Durchführung des erfindungsgemäßen Verfahrens wird dann die elektrochemische Zelle mit der zu reinigenden Reinigungseinrichtung vorzugsweise über eine Leitung verbunden.

Bevorzugt weist das wasserführende elektrische Gerät eine Dosiereinrichtung auf, die zum Zuführen von der Elektrolytlösung in einer vorbestimmten Dosis in die elektrochemische Zelle geeignet ist, die zwischen der Bleicheinrichtung und der Dosiereinrichtung angeordnet ist. Vorzugsweise ist die Dosiereinrichtung eine automatische Dosiereinrichtung. Unter einer automatischen Dosiereinrichtung wird im Sinne der Erfindung eine Dosiereinrichtung verstanden, die der elektrochemischen Zelle und/oder der Bleicheinrichtung automatisch eine vorbestimmte Dosis Flüssigkeit zuführt, wenn dies erforderlich ist.

Die Dosiereinrichtung kann ein- oder mehrteilig ausgebildet sein. In einer bevorzugten Ausführungsform weist die Dosiereinrichtung mindestens zwei Dosierkammern auf, die benachbart oder beabstandet zueinander ausgebildet sind. Jede Dosierkammer ist vorzugsweise über jeweils eine Leitung mit der Bleicheinrichtung verbunden, um ihr bei Betrieb Flüssigkeit zuführen zu können. In mindestens einer der Leitungen ist die elektrochemische Zelle zwischen der jeweiligen zugehörigen Dosierkammer und der Bleicheinrichtung angeordnet, so dass bei Aktivierung einer Dosiertätigkeit die Elektrolytlösung aus der zugehörigen Dosierkammer durch die Leitung in die elektrochemische Zelle geleitet wird. Unter dem Begriff Dosierkammer werden im Sinne der Erfindung auch auswechselbare Behälter wie beispielweise Lagerbehälter oder Flaschen verstanden, die in einer Haltevorrichtung angeordnet sind. Bei den Leitungen kann es sich um Schläuche, Rohre, Kanäle oder dergleichen handeln.

Ein Ausführungsbeispiel der Erfindung ist in den Zeichnungen rein schematisch dargestellt und wird nachfolgend näher beschrieben. Es zeigt
- Fig. 1: eine schematische und nicht maßstabsgerechte Ansicht eines wasserführenden elektrischen Geräts;
- Fig. 2: einen zeitlichen Verlauf einer elektrolytischen Herstellung von Bleichmitteln in verschiedenen Elektrolyten; und
- Fig. 3: einen zeitlichen Verlauf einer Stabilität der entsprechend Fig. 2 elektrolytisch hergestellten Bleichmitteln in den verschiedenen Elektrolyten.

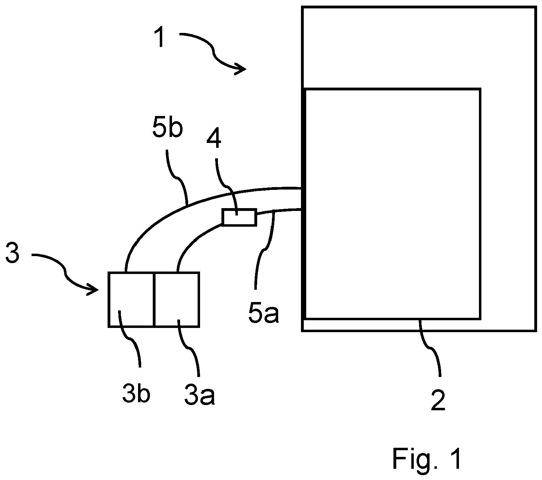

Fig. 1 zeigt eine schematische und nicht maßstabsgerechte Ansicht eines erfindungsgemäßen wasserführenden elektrischen Geräts 1. Das elektrische Gerät 1 weist eine Bleicheinrichtung 2, eine Dosiereinrichtung 3 und eine elektrochemische Zelle 4 auf. Die Dosiereinrichtung 3 weist eine Dosierkammer 3a und eine weitere Dosierkammer 3b auf. Die elektrochemische Zelle 4 ist zwischen der Dosierkammer 3a und der Bleicheinrichtung 2 angeordnet. Die Dosierkammer 3a ist mit der Bleicheinrichtung 2 und der elektrochemischen Zelle 4 über eine Leitung 5a verbunden, so dass bei Aktivierung einer Pumpe (nicht gezeigt) eine Flüssigkeit (nicht gezeigt) aus der Dosierkammer 3a in die elektrochemische Zelle 4 und dann in die Bleicheinrichtung 2 gefördert werden kann. Die weitere Dosierkammer 3b ist mit der Bleicheinrichtung 2 über eine weitere Leitung 5b verbunden, so dass bei Aktivierung einer Pumpe (nicht gezeigt) eine Flüssigkeit (nicht gezeigt) aus der Dosierkammer 3b in die Bleicheinrichtung 2 gefördert werden kann.

Wenn ein Nutzer (nicht gezeigt) ein in dem wasserführenden elektrischen Gerät 1 hinterlegtes Reinigungsprogramm auswählt und startet, wird, wenn das gestartete Reinigungsprogramm eine Aktivierung der elektrochemischen Zelle 4 vorsieht, eine Elektrolytlösung, die Wasser und einen Builder als Elektrolyt enthält, aus der Dosierkammer 3a in die elektrochemische Zelle (4) dosiert und ein Bleichmittel mittels Aktivierens der elektrochemischen Zelle 4 hergestellt. Insbesondere wird Wasserstoffperoxid als das Bleichmittel erzeugt, wenn der elektrochemischen Zelle 4 Luft zugeführt und Strom an sie angelegt wird. Das erzeugte Bleichmittel wird aus der elektrochemischen Zelle 4 in die Bleicheinrichtung 2 geleitet, um die Bleicheinrichtung 2 selber und/oder sich in ihr befindendes Reinigungsgut zu reinigen.

Das vorstehend beschriebene Verfahren bzw. Betriebsweise des in Fig. 1 gezeigten wasserführenden elektrischen Geräts können auch realisiert werden, wenn die elektrochemische Zelle und/oder die Bleicheinrichtung nicht im Gerät integriert oder extern angeordnet sind.

Bei dem in Fig. 1 gezeigten wasserführenden Haushaltsgeräten 1 ist es weiterhin möglich, einen Vorlagebehälter (nicht gezeigt) zwischen der elektrochemischen Zelle 4 und der Bleicheinrichtung 2 anzuordnen und für eine oder mehrere Anwendungen zu füllen. Aus dem Vorlagebehälter kann dann bei Bedarf in den Entkeimungs- und/oder Waschprozess Bleichmittel in die Bleicheinrichtung 2 dosiert werden. Dies ist vor allem sinnvoll, wenn kurzfristig größere Mengen Bleichmittel benötigt werden.

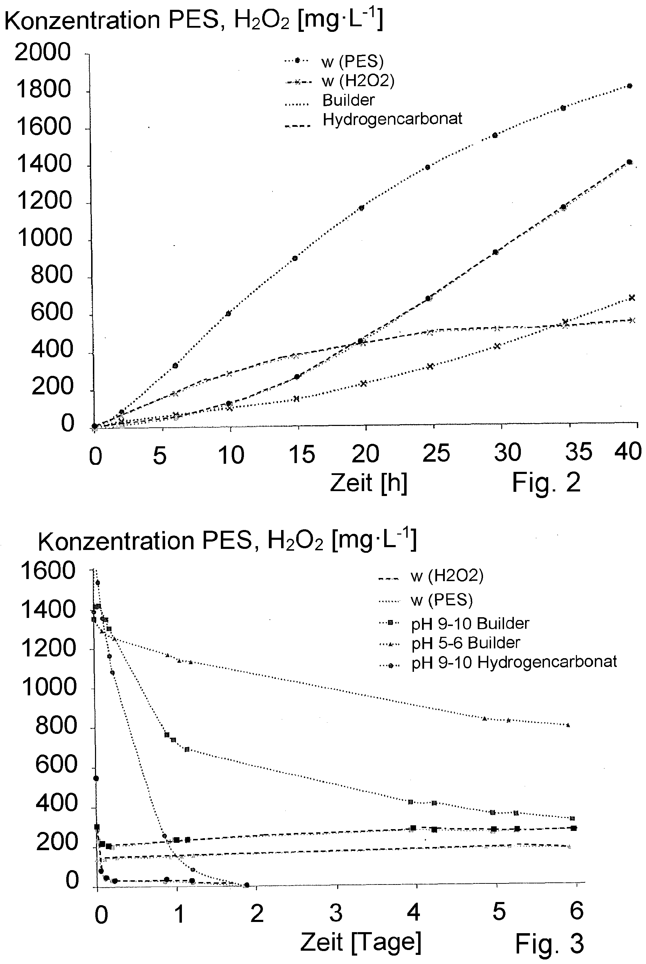

Fig. 2 zeigt einen zeitlichen Verlauf einer elektrolytischen Herstellung von Bleichmitteln in verschiedenen Elektrolyten.

Ein Anodenraum und ein Kathodenraum einer elektrochemischen Zelle mit einer Gasdiffusionselektrode als Kathode wurden in einer erste Variante jeweils (da sie räumlich voneinander getrennt sind) in einer ersten Variante mit 10,0 g·L⁻¹ Builder als Elektrolyt (beispielsweise der Builder in dem nachstehenden Beispiel) mit einem Volumenstrom von 0,5 L·min⁻¹ durchströmt. Gleichzeitig wird ein Gasraum des Kathodenraums mit einem Volumenstrom von 5 L·min⁻¹ durchströmt und Strom an die Anode und Kathode mit einer Stromstärke von 4 A und einer Stromdichte von 28,6 mA·cm⁻² angelegt. Weiterhin wird der elektrochemischen Zelle 7,5 g Triacetin als Bleichaktivator bereitgestellt. In einer zweiten Variante wurde 10,9 g·L⁻¹ Kaliumhydrogencarbonat als Elektrolyt anstelle des Builders verwendet.

In beiden Varianten wird elektrolytisch, wie vorstehend erläutert, Wasserstoffperoxid in einem alkalischen Milieu durch Trennung von Kathodenraum und Anordenraum erzeugt, das mit dem Triacetin zu Peroxyessigsäure (PES) reagiert.

Wie aus Fig. 2 ersichtlich, werden unter Verwendung des Builders als Elektrolyt deutlich mehr H₂O₂ und PES hergestellt als mit Kaliumhydrogencarbonat als Elektrolyt.

Fig. 3 zeigt einen zeitlichen Verlauf einer Stabilität der entsprechend Fig. 2 elektrolytisch hergestellten Bleichmitteln in den verschiedenen Elektrolyten.

Im alkalischen Bereich wies PES eine Halbwertzeit von 1,15 Tagen und im sauren Bereich von >6 Tagen bei Verwendung des Builders als Elektrolyt auf. Eine H₂O₂-Konzentration war bei Verwendung des Builders als Elektrolyt relativ konstant. Bei Verwendung von Kaliumhydrogencarbonat als Elektrolyt fand nach 2 Tagen ein kompletter Zerfall von H₂O₂ und PES statt.

Nachfolgend wird die Erfindung anhand eines Beispiels detaillierter erläutert.

### BEISPIEL

Eine Builder-haltige Elektrolytlösung weist folgende Komponenten auf:

| Komponente | Anteil [Gew.-%] |
|---|---|
| Wasser | 68,531 |
| Natriumcitrat | 26,069 |
| Natriumacrylsäure/Co-Polymer | 3,000 |
| Trinatriumcarboxymethylalinat | 1,200 |
| Nariumdiethylentriaminpentamethylenphosphonat | 0,960 |
| Natriumchlorid | 0,240 |

### Bezugszeichenliste

- 1: wasserführendes elektrisches Gerät
- 2: Bleicheinrichtung
- 3: Dosiereinrichtung
- 3a: Dosierkammer
- 3b: weitere Dosierkammer
- 4: elektrochemische Zelle
- 5a: Leitung
- 5b: weitere Leitung

## Patentansprüche

1. Verwendung eines Builders als Elektrolyt für eine elektrochemische Zelle (4).

2. Verwendung nach Anspruch 1, **dadurch gekennzeichnet, dass** der Builder bei einer elektrolytischen Herstellung eines Bleichmittels eingesetzt wird.

3. Verwendung nach Anspruch 1 oder 2, **dadurch gekennzeichnet, dass** das Bleichmittel in situ während einer Durchführung eines Reinigungsprogramms zur Reinigung von Wäsche, Geschirr, medizinischen Instrumenten und/oder Laborgeräten elektrolytisch hergestellt wird.

4. Verfahren zum Betreiben eines wasserführenden elektrischen Geräts mit einer Bleicheinrichtung (2) und einer elektrochemischen Zelle (4), aufweisend die Schritte
- Bereitstellen einer Elektrolytlösung, die Wasser und einen Builder als Elektrolyt enthält, in der elektrochemischen Zelle (4);
- Herstellung eines Bleichmittels mittels Aktivierens der elektrochemischen Zelle (4); und
- Zuführen des Bleichmittels aus der elektrochemischen Zelle (4) in die Bleicheinrichtung (2).

5. Verwendung nach einem der Ansprüche 1 bis 3 oder Verfahren nach Anspruch 4, **dadurch gekennzeichnet, dass** der Builder eine oder mehrere Komponenten aufweist, ausgewählt aus der Gruppe, bestehend aus Zitronensäure, Milchsäure, Phosphonat, Polycarbonsäure, bevorzugt Aminocarbonsäure, Polyacrylsäure und deren Salze.

6. Verwendung nach einem der Ansprüche 1 bis 3 oder 5 oder Verfahren nach Anspruch 4 oder 5, **dadurch gekennzeichnet, dass** der Elektrolyt weiterhin ein oder mehrere anorganische Salze aufweist, wobei das oder die anorganischen Salze bevorzugt Natriumsulfat, Natriumhydrogencarbonat und/oder Kaliumhydrogencarbonat sind.

7. Verfahren nach einem der vorangehenden Ansprüche 4 bis 6, **dadurch gekennzeichnet, dass** der elektrochemischen Zelle (4) und/oder der Bleicheinrichtung (2) weiterhin ein Bleichaktivator zugeführt wird.

8. Verfahren nach einem der vorangehenden Ansprüche 4 bis 7, **dadurch gekennzeichnet, dass** sich in der Bleicheinrichtung (2) Wäsche, Geschirr, medizinische Instrumente und/oder Laborgeräte befinden.

9. Wasserführendes elektrisches Gerät (1) mit einer Bleicheinrichtung (2) und einer elektrochemischen Zelle (4) und einer Steuer- oder Regeleinrichtung, die eingerichtet und ausgebildet ist, ein Verfahren nach einem der vorangehenden Ansprüche 4 bis 8 zu steuern oder zu regeln.

10. Wasserführendes elektrisches Gerät (1) nach Anspruch 9, **dadurch gekennzeichnet, dass** es als eine Waschmaschine, ein Geschirrspüler oder ein Desinfektor ausgebildet ist.
